# EUROPÄISCHE PATENTSCHRIFT

(11) **EP 2 473 378 B1**
(45) Veröffentlichungstag und Bekanntmachung des Hinweises auf die Patenterteilung: **27.11.2013**
(21) Anmeldenummer: 10759575.3
(22) Anmeldetag: 03.09.2010
(51) Int. Cl.: B60R 16/023, G07C 5/00

(54) **VERFAHREN UND VORRICHTUNG ZUM BETREIBEN EINER NUTZERSCHNITTSTELLE ZUR ANZEIGE DER REICHWEITE EINES FAHRZEUGES**
METHOD AND DEVICE FOR OPERATING A USER INTERFACE FOR DISPLAYING THE RANGE OF A VEHICLE
MÉTHODE ET DISPOSITIF POUR UTILISER UN INTERFACE UTILISATEUR POUR AFFICHER LA DISTANCE RESTANTE D'UN VÉHICULE

(30) Priorität: 04.09.2009 DE 102009040268; 04.06.2010 DE 102010022719
(43) Veröffentlichungstag der Anmeldung: 11.07.2012
(73) Patentinhaber: Volkswagen Aktiengesellschaft, 38440 Wolfsburg (DE)
(72) Erfinder: DEHMANN, Rainer, 10961 Berlin (DE)
(86) Internationale Anmeldenummer: PCT/EP2010/005401
(87) Internationale Veröffentlichungsnummer: WO 2011/026625

(56) Entgegenhaltungen:
- EP-A2- 2 028 059
- DE-A1- 10 138 750
- DE-A1-102007 054 738
- DE-A1-102008 035 460
- US-A- 5 686 895
- US-A1- 2003 144 779

## Beschreibung

Die vorliegende Erfindung betrifft ein Verfahren und eine Vorrichtung zum Betreiben einer Nutzerschnittstelle in einem Fahrzeug, insbesondere zum Bestimmen und Anzeigen von Informationen zu im Fahrzeug angeordneten elektrischen Verbrauchern. Das Verfahren und die Vorrichtung eignen sich daher insbesondere für ein durch einen Elektromotor angetriebenes Fahrzeug.

In einem Fahrzeug sind heutzutage eine Vielzahl von elektrisch gespeisten Zusatzsystemen eingebaut. Die Versorgung dieser auch als elektrische Verbraucher bezeichneten Zusatzsysteme mit elektrischer Energie erfolgt üblicherweise aus der Fahrzeugbatterie, die ihrerseits gegebenenfalls aus anderen Energiequellen gespeist oder aufgeladen werden kann. Die gängigsten solcher Verbraucher sind insbesondere neben Infotainmenteinrichtungen, Navigationssystemen oder Kommunikationseinrichtungen auch Klimaanlagen zur Klimatisierung des Fahrzeuginnenraums.

Die Anzahl der elektrischen Verbraucher wird auch in Zukunft weiter zunehmen. Insbesondere finden Klimaanlagen in Kraftfahrzeugen immer weitere Verbreitung. Mit der steigenden Anzahl oder Verbreitung solcher Verbraucher wird insbesondere der dadurch zusätzlich erzeugte Energieverbrauch für den Gesamtenergieverbrauch des Fahrzeugs zu berücksichtigen sein.

Dieser zusätzliche Energieverbrauch führt nicht nur allgemein zu steigenden Kosten, sondern verringert auch die Reichweite des Fahrzeugs. Dies wirkt sich insbesondere für solche Fahrzeuge negativ aus, die direkt von einem Elektromotor angetrieben werden. In der Frühphase der Elektromobilität liegen nämlich die Reichweiten solcher Fahrzeuge derzeit noch deutlich unterhalb von Fahrzeugen, die durch einen Verbrennungsmotor angetrieben werden. Andererseits ist die Versorgung mit entsprechenden Ladestationen zum Aufladen der Fahrzeugbatterie zur Zeit noch nicht flächendeckend. Es ist daher wünschenswert, dem Fahrer sehr präzise Informationen über die zu erwartende Reichweite seines Fahrzeugs bereitzustellen und gegebenenfalls Hinweise zu geben, wie diese Reichweite vergrößert werden kann.

In der EP 2 028 059 A2 wird ein Kraftfahrzeug mit mehreren zu- oder abschaltbaren Systemen beschrieben, deren Betrieb zu einer Erhöhung des Kraftstoffverbrauchs führt. Der Energieverbrauch der einzelnen Systeme kann getrennt ermittelt und angezeigt werden, z:B. in Liter pro Stunde, Liter pro 100 Kilometer oder in Prozent eines angenommenen Maximalwerts.

Die DE 101 38 750 B4 beschreibt ein Verfahren zum Darstellen von Energieverbrauchern in einem Fahrzeug. Dabei werden die Verbrauchsdaten verschiedener Verbraucher ermittelt und der jeweilige Verbrauch sowie die bei Abschaltung erreichbare Reichweitenverlängerung in einer Liste dargestellt.

Es ist die Aufgabe der vorliegenden Erfindung ein Verfahren und eine Vorrichtung der eingangs genannten Art anzugeben, mittels welchen dem Benutzer des Fahrzeugs ermöglicht wird, die Auswirkungen des Energieverbrauchs von elektrischen Verbrauchern einzusehen sowie durch sein Handeln die Fahrzeugreichweite vergrößern und Kosten einsparen zu können.

Diese Aufgabe wird erfindungsgemäß durch ein Verfahren mit den Merkmalen des Anspruchs 1 sowie einer entsprechenden Vorrichtung mit den Merkmalen des Anspruchs 8 gelöst. Vorteilhafte Aus- und Weiterbildungen ergeben sich aus den Unteransprüchen.

Bei dem erfindungsgemäßen Verfahren zum Betreiben einer Nutzerschnittstelle in einem Fahrzeug wird ein Bedienvorgang erfasst, durch welchen der Betrieb eines im Fahrzeug angeordneten elektrischen Verbrauchers verändert wird, und es wird die durch den Bedienvorgang verursachte Änderung des Energieverbrauchs des elektrischen Verbrauchers bestimmt. Aus dem bestimmten Energieverbrauch wird eine durch die Veränderung des Betriebs des elektrischen Verbrauchers verursachte Reichweitenänderung des Fahrzeugs berechnet und die berechnete Reichweitenänderung wird unmittelbar angezeigt. Die unmittelbare Anzeige der durch den Bedienvorgang verursachten Reichweitenänderung hat dabei den Vorteil, dass dem Nutzer, typischerweise der Fahrer oder Beifahrer des Fahrzeugs, sofort die Auswirkung seines Handels verdeutlicht wird, er muss nicht erst in einem anderen Bedienmenü eine Aufstellung über die momentanen elektrischen Verbraucher aufrufen.

"Unmittelbar" bedeutet im Sinne der Erfindung eine Anzeige mit den üblichen technikbedingten Verzögerungszeiten, die beispielsweise durch den Bestimmvorgang der Änderung des Energieverbrauchs oder die Datenverarbeitung oder -übermittlung bedingt sind. Die Verzögerung liegt beispielsweise im Bereich von einigen Zehntelsekunden bis Sekunden und die Anzeige erfolgt automatisch ohne weiteren Bedienvorgang seitens des Nutzers. Der Bestimmvorgang der Änderung des Energieverbrauchs kann dabei insbesondere in einem ersten Durchgang aus einer groben Messung oder einer Schätzung bestehen, die in einem zweiten Durchgang durch eine genauere Messung verfeinert wird. Dies ist vorteilhaft, wenn die Messung der exakten Änderung des Energieverbrauchs einen Zeitraum in Anspruch nimmt, der einer unmittelbaren Anzeige entgegenstehen würde. Eine Schätzung kann insbesondere aus in der Vergangenheit erfolgten und in einer Datenbank abgelegten Vergleichsmessungen bestehen. Sie kann auch über Interpolation, Extrapolation oder über eine Regressionsanalyse berechnete Werte beinhalten:

Der Bedienvorgang, durch welchen der Betrieb eines im Fahrzeug angeordneten elektrischen Verbrauchers verändert wird, ist insbesondere ein Einschalten oder Hochschalten eines elektrischen Verbrauchers. Beispielsweise schaltet der Fahrer des Fahrzeugs das Autoradio ein oder stellt eine Klimatisierungsfunktion der Klimaanlage auf eine höhere Betriebsstufe, indem er z.B. einen stärkerer Ventilationsstrom wählt. Es kann sich erfindungsgemäß aber auch um andere Bedienvorgänge zum Steuern von elektrisch betriebenen Verbrauchern handeln, beispielsweise dem Abschalten eines Verbrauchers. Auf diese Weise wird dem Nutzer nicht nur die Reichweitenreduzierung beim Zuschalten eines neuen oder Erhöhen eines bereits eingeschalteten Verbrauchers angezeigt, sondern auch die Reichweitenvergrößerung im gegenteiligen Falle. Er bekommt damit unmittelbar eine systemseitige Rückmeldung, ob sich ein Bedienvorgang energiebedürftig, energieschonend oder energieneutral auswirkt.

Falls sich ohne Bedienvorgang der Energieverbrauch eines elektrischen Verbrauchers dramatisch ändert, kann dies wahlweise auch angezeigt werden. Beispielsweise wird angezeigt, wenn eine sensorisch gesteuerte Klimaautomatik im Verlaufe eines heißen Sommertages einzelne Klimatisierungsfunktionen automatisch hochregelt oder eine Mobilfunkeinrichtung bei schlechten Empfangsbedingungen die Sendeleistung erhöht, woraufhin der Fahrer des Fahrzeugs auf die daraus resultierende Reichweitenreduzierung hingewiesen wird.

Die Reichweitenänderung wird insbesondere auf einer Anzeigefläche im Fahrzeug graphisch dargestellt. Die Anzeigefläche kann dabei zu einem sogenannten Kombiinstrument gehören, das üblicherweise mehrere Bereiche aufweist, in denen verschiedene Informationen angezeigt werden. Diese Bereiche können neben analogen Zeigeranzeigeeinrichtungen, wie beispielsweise mechanische Rundinstrumente zur analogen Darstellung einer Information, wie z.B. der Geschwindigkeit, weitere frei programmierbare Bereiche umfassen, in denen die durch den elektrischen Verbraucher verursachte Reichweitenänderung des Fahrzeugs beispielsweise als Einzelnachricht oder in einer Graphik dargestellt werden kann. Als Anzeigefläche werden nach an sich bekannter Art beispielsweise Flüssigkristallanzeigen (LCDs), insbesondere Dünnschicht-(thin-film-transistor, TFT)-Displays eingesetzt.

Alternativ oder zusätzlich kann die Reichweitenänderung an dem Bedienelement angezeigt werden, über welches der Bedienvorgang zum Ändern des Betriebs des elektrischen Verbrauchers erfasst wurde. Da der Nutzer beim Bedienvorgang in der Regel zumindest kurzfristig auf das entsprechende Bedienelement schauen muss, wird ihm hierdurch die Auswirkung des Bedienvorgangs auf die Reichweitenänderung unmittelbar und an prominenter Stelle visuell signalisiert, beispielsweise durch eine Änderung der Farbe oder Intensität einer Beleuchtung.

Typischerweise ist ein solches Bedienelement als mechanischer Tast-, Dreh oder Kippschalter mit einer fest zugeordneten Funktionsbelegung ausgestaltet. Das Bedienelement kann aber auch als sogenannter Softkey benachbart zu der obengenannten Anzeigefläche angeordnet sein, wobei dem Bedienelement eine auf der Anzeigefläche variabel anzeigbare Funktion zugeordnet ist. Zweckmäßigerweise ist ein solches mechanisches Bedienelement mit einer Beleuchtungseinrichtung be- oder hinterleuchtbar, wobei die aus dem Bedienvorgang resultierende Reichweitenreduzierung z.B. durch das Einschalten, eine Intensitätserhöhung oder einen Farbwechsel der Beleuchtung angezeigt wird.

Alternativ kann das Bedienelement auch als Schaltfläche auf der Anzeigefläche bereitgestellt werden. Unter einer Schaltfläche wird im Sinne der Erfindung ein Steuerelement einer graphischen Nutzerschnittstelle verstanden. Eine Schaltfläche kann beliebig auf einer frei programmierbaren Anzeigefläche erzeugt werden und unterscheidet sich von Elementen und Flächen zur reinen Informationsanzeige, so genannten Anzeigeelementen bzw. Anzeigenflächen, darin, dass sie auswählbar sind. Die Schaltflächen können die zuvor genannten herkömmlichen mechanischen Schalter ersetzen. Bei einer Auswahl einer Schaltfläche wird eine ihr zugeordnete Funktion, insbesondere die Änderung des Betriebs eines elektrischen Verbrauchers ausgeführt. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Insbesondere wird dabei eine zu erwartende Reichweitenveränderung angezeigt, z.B. indem sich die Farbe der Schaltfläche ändert. Die Markierung und/oder Auswahl einer Schaltfläche kann mittels einer Cursorsteuerung oder durch direkte Bedienung einer berührungsempfindlichen Oberfläche der Anzeigefläche erfolgen.

Vorteilhafterweise kann bereits während des Bedienvorgangs, durch welchen der Betrieb des im Fahrzeug angeordneten elektrischen Verbrauchers verändert werden soll, die bei Vollendung des Bedienvorgangs zu erwartende Reichweitenänderung berechnet und angezeigt werden. Dabei kann der Nutzer schnell erkennen, ob sein Handeln gegebenenfalls einen dramatischen Einfluss auf die Reichweitenänderung hat und den Bedienvorgang dann sofort abbrechen oder rückgängig machen, wenn aus seiner Sicht eine unverhältnismäßige Reichweitenminderung die Folge wäre. Dabei kann er diese Aktion in einem Vorgang abschließen, was die Gefahr einer Fehlbedienung oder Ablenkung vom Straßenverkehr reduziert. Es kann auch vorgesehen sein, dass bei solchen Bedienvorgängen, die eine Reichweitenminderung jenseits eines festgesetzten Grenzwertes zur Folge hätten, vor der entsprechenden Funktionsausführung zunächst eine Aufforderung zu einer Nutzereingabe ausgegeben wird, die zum Fortführen oder Abbruch des Bedienvorgangs auffordert.

Das erfindungsgemäße Verfahren eignet sich insbesondere für Fahrzeuge, die durch einen Elektromotor angetrieben werden, da in der Frühphase der Elektromobilität die Reichweite von Elektrofahrzeugen noch relativ gering gegenüber Fahrzeugen mit einem Verbrennungsmotor ist und außerdem die Versorgung mit entsprechenden Ladestationen zum Aufladen der Fahrzeugbatterie noch nicht flächendeckend bereitgestellt werden kann. Auf diese Weise kann dem Fahrer eines Elektrofahrzeugs das Thema Reichenweitenmanipulation unmittelbar bewusst gemacht werden.

Insbesondere ist der elektrische Verbraucher eine Klimatisierungsanlage für den Innenraum des Fahrzeugs. Da Klimatisierungsfunktionen üblicherweise den überwiegenden Bedarf an zusätzlicher elektrischer Energie im Fahrzeug beanspruchen, ist es auch zweckmäßig, dass die eingestellten und/oder durch den Bedienvorgang geänderten Klimatisierungsfunktionen, z.B. die Ventilationsstufe oder die gewählte Temperatur, graphisch auf der Anzeigefläche mit den jeweils zugehörigen Reichweitenänderungen angezeigt werden. Auf diese Weise kann dem Nutzer besser veranschaulicht werden, durch welche gegenwärtig gewählte Klimatisierungsfunktion gegebenenfalls die Restreichweite am meisten manipuliert werden kann.

Die erfindungsgemäße Vorrichtung zum Betreiben einer Nutzerschnittstelle in einem Fahrzeug umfasst Mittel zum Bestimmen des Energieverbrauchs eines im Fahrzeug angeordneten elektrischen Verbrauchers, ein Bedienelement, durch welches ein Bedienvorgang erfassbar ist, durch welchen der Betrieb des elektrischen Verbrauchers veränderbar ist und Anzeigemittel zum Anzeigen von Informationen. Die Vorrichtung umfasst des Weiteren eine Steuervorrichtung, die mit den Mitteln zum Erfassen des Energieverbrauchs und den Anzeigemitteln gekoppelt ist, wobei mittels der Steuervorrichtung die Anzeigemittel steuerbar sind und aus dem bestimmten Energieverbrauch eine Reichweitenänderung des Fahrzeugs berechenbar ist. Die erfindungsgemäße Vorrichtung ist dadurch gekennzeichnet, dass die Anzeigemittel derart von der Steuervorrichtung steuerbar sind, dass eine während und/oder nach Vollendung des Bedienvorgangs durch den Bedienvorgang zu erwartende und/oder verursachte Reichweitenänderung unmittelbar anzeigbar ist. Eine Ausgestaltung der erfindungsgemäßen Vorrichtung zum Betreiben einer Nutzerschnittstelle sieht ferner vor, dass die Anzeigemittel leuchtstärkeregelbare und/oder farblich steuerbare Beleuchtungsmittel zum Be- oder Hinterleuchten des Bedienelements und/oder eine Anzeigefläche zum Darstellen der Reichweitenänderung umfassen. Die Vorrichtung ist insbesondere zum Durchführen des erfindungsgemäßen Verfahrens geeignet. Sie weist somit auch die Vorteile des erfindungsgemäßen Verfahrens auf.

Erfindungsgemäß ist des Weiteren ein Fahrzeug, insbesondere ein Fahrzeug, das durch einen Elektromotor angetrieben wird, mit einer solchen Vorrichtung zum Betreiben einer Nutzerschnittstelle ausgestattet.

Die Erfindung wird nun anhand eines Ausführungsbeispiels mit Bezug zu den Figuren näher erläutert.
- Figur 1: zeigt schematisch den Aufbau eines Ausführungsbeispiels der erfindungsgemäßen Vorrichtung zum Betreiben einer Nutzerschnittstelle,
- die Figur 2a - 2c: zeigen Bedienvorgänge zur Veränderung des Betriebs eines elektrischen Verbrauchers in einem Fahrzeug mit dazugehörigen Anzeigen, wie sie nach einem Ausführungsbeispiels des erfindungsgemäßen Verfahrens erzeugt wurden, und
- Figur 3: zeigt ein Ausführungsbeispiel eines Bedienteils zum Durchführen der Bedienvorgänge des erfindungsgemäßen Verfahrens.

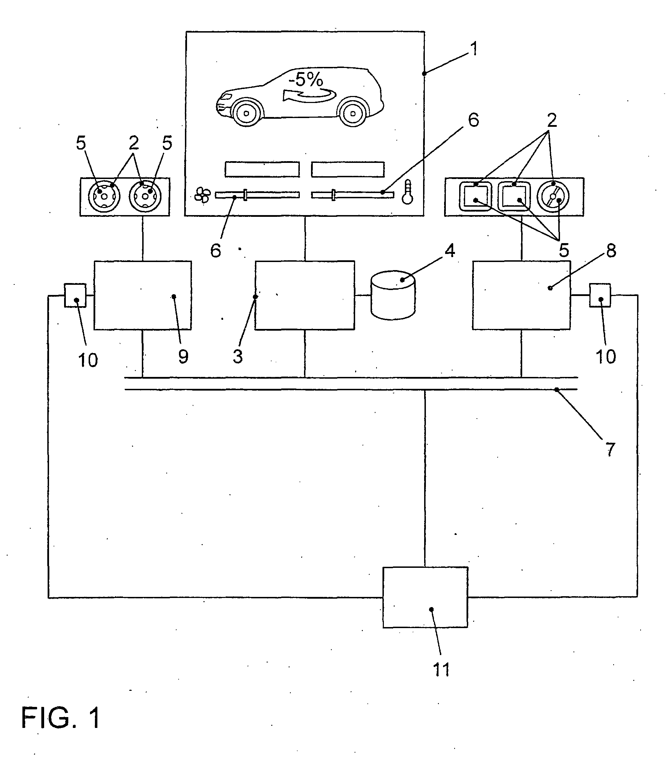

In Figur 1 ist schematisch der Aufbau eines Ausführungsbeispiels der erfindungsgemäßen Vorrichtung zum Betreiben einer Nutzerschnittstelle dargestellt. Eine Anzeigefläche 1 mit einer berührungsempfindlichen Oberfläche zum Anzeigen von Informationen ist in einem durch einen Elektromotor angetriebenen Fahrzeug, das im Folgenden auch als Elektrofahrzeug bezeichnet wird, angeordnet. Die Anzeigefläche 1 kann zur Anzeige vielfältiger Informationen genutzt werden und beispielsweise Anzeigeinhalte eines Navigationssystems, einer Infotainmentanlage oder anderer funktionaler Einrichtungen des Fahrzeugs ausgeben. Diese Einrichtungen sind elektrische Verbraucher im Sinne der Erfindung.

Im gezeigten Ausführungsbeispiel sind als elektrische Verbraucher eine Klimatisierungsanlage 8 und ein weiterer elektrischer Verbraucher 9, beispielsweise eine Infotainmentanlage, dargestellt. Ihr Betrieb lässt sich über ihnen zugeordnete Bedienelemente 5 verändern. Die Bedienelemente 5 können nach an sich bekannter Art als Tast- oder Drehschalter oder als Mehrrichtungstaste ausgestaltet sein. Die Bedienelemente 5 sind mit Beleuchtungsmitteln 2 versehen, mit denen sie be- oder hinterleuchtet werden können. Die Beleuchtungsmittel 2 sind beispielsweise durch LEDs (Light Emitting Diodes) realisiert, über die Licht mindestens zwei verschiedener Wellenlängen, z.B. rot und gelb, abgestrahlt werden kann. Weiterhin können auf der Anzeigefläche 1 Schaltflächen 6 zur Verfügung gestellt werden, über die ein Nutzer kontextspezifisch weitere Bedienvorgänge durchführen kann.

Den elektrischen Verbrauchern 8, 9 sind Mittel 10 zum Erfassen des Energieverbrauchs zugeordnet, mit denen insbesondere die Veränderung des Energieverbrauchs in Abhängigkeit von dem Betrieb des jeweiligen elektrischen Verbrauchers 8, 9 bestimmt werden kann. Der Energieverbrauch kann typischerweise mittels herkömmlicher Verfahren der Leistungsmessung erfolgen. Beispielsweise werden Strom- und Spannungswerte in regelmäßigen zeitlich aufeinanderfolgenden Abschnitten abgetastet und aus ihrem Produkt die elektrische Energie bzw. Leistung abgeleitet. Insbesondere kann dabei erfasst werden, bei welchem Bedienvorgang sich die von dem jeweiligen Verbraucher 8, 9 benötigte elektrische Leistung verändert und so bestimmten Betriebszuständen eine Verbrauchscharakteristik zugeordnet werden.

Die Steuervorrichtung 3 ist über den Datenbus 7 im Fahrzeug mit den elektrischen Verbrauchern 8, 9 und den daran angeschlossenen Mitteln 10 zum Erfassen des Energieverbrauchs datentechnisch gekoppelt. Die Steuervorrichtung 3 ist ferner mit einer Datenbank 4 verbunden, in der die erfasste Verbrauchscharakteristik der einzelnen Betriebszustände gespeichert werden kann. Zu einem späteren Zeitpunkt kann auf diese Weise auch schon während eines Bedienvorgangs die zu erwartende Änderung des Energieverbrauchs bestimmt werden, indem beispielsweise eine Schätzung mittels der in der Vergangenheit gewonnenen Daten durchgeführt wird. Eine solche Schätzung kann auch eine Regressionsanalyse, Interpolation oder Extrapolation über eine Vielzahl bereits erfasster Betriebszustände umfassen.

Ferner umfasst die Fahrzeugbatterie 11 des Elektrofahrzeugs eine Messvorrichtung zum Messen des Ladezustands, die über den Datenbus 7 mit der Steuervorrichtung 3 datentechnisch gekoppelt ist, so dass die Steuervorrichtung 3 den Ladezustand der Fahrzeugbatterie 11 erfassen kann.

Die Anzeigefläche 1 ist mit der Steuervorrichtung 3 verbunden, so dass die Anzeigeinhalte mittels der Steuervorrichtung 3 gesteuert werden können. Insbesondere können auf der Anzeigefläche 1 Informationen zu der Reichweitenänderung des Elektrofahrzeugs in Abhängigkeit von der Veränderung des Betriebs der elektrischen Verbraucher 8, 9 unmittelbar angezeigt werden. Ferner sind die Beleuchtungsmittel 2 der den elektrischen Verbrauchern 8, 9 zugeordneten Bedienelemente 5 über den Datenbus 7 im Fahrzeug mit der Steuervorrichtung 3 gekoppelt und können durch diese separat gesteuert werden. Die Beleuchtungsmittel 2 sind mittels der Steuervorrichtung 3 in zwei verschiedenen Farben ansteuerbar und leuchtstärkeregelbar.

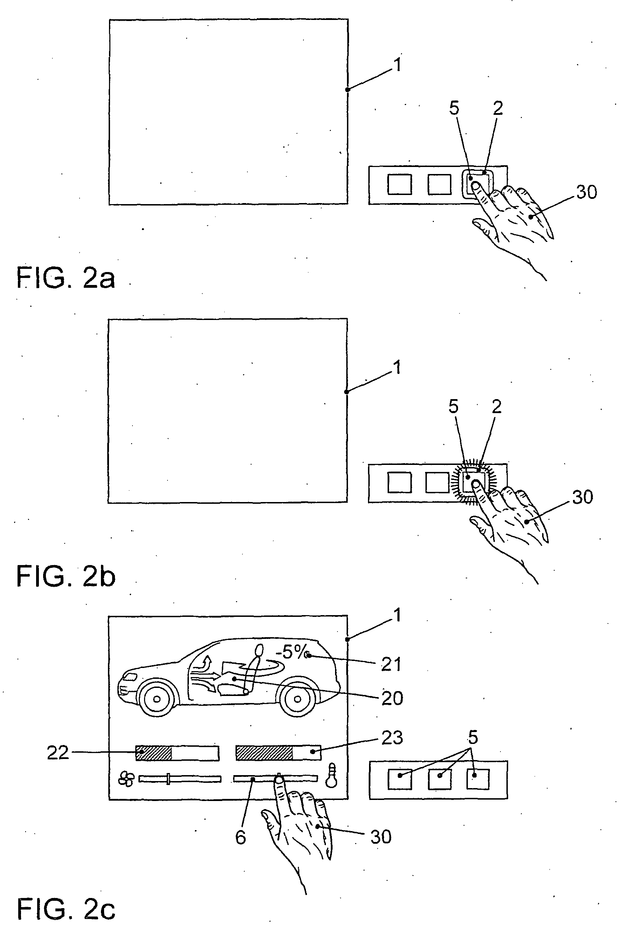

Das erfindungsgemäße Verfahren wird nun anhand der Figuren 2a - 2c näher erläutert. Es sind dort drei aufeinanderfolgende Phasen eines Bedienvorgangs zur Veränderung des Betriebs der Klimatisierungsanlage 8 aus dem oben beschriebenen Ausführungsbeispiel der erfindungsgemäßen Vorrichtung mit den dazugehörigen Anzeigen dargestellt, wie sie gemäß dem Ausführungsbeispiel des erfindungsgemäßen Verfahrens erzeugt wurden. Dabei sind insbesondere die in Figur 2b und in Figur 2c dargestellten Phasen des Bedienvorgangs auch unabhängig voneinander ausführbar und bedingen einander nicht.

In Figur 2a betätigt ein Nutzer mit seiner Hand 30 das Bedienelement 5, um den Betrieb der Klimatisierungsanlage 8 zu verändern. Beispielsweise möchte er über das Bedienelement 5 die fest zugeordnete Funktion der Umluftverteilung im Fahrzeug einschalten. Dem Bedienelement 5 können aber auch situationsabhängig auf der Anzeigefläche 1 angezeigte Funktionen zugeordnet sein (nicht dargestellt). Durch den Bedienvorgang wird eine Änderung des Energieverbrauchs der Klimatisierungsanlage 8 verursacht.

Bereits während des Bedienvorgangs, bevor die eigentliche Funktion eingeschaltet wird, wird die bei Vollendung des Bedienvorgangs zu erwartende Änderung des Energieverbrauchs bestimmt und die daraus zu erwartende Reichweitenänderung berechnet. Dabei wird beispielsweise schon durch leichtes Berühren des Bedienelements 5 ein Signal an die Steuervorrichtung 3 gesendet, die den Betriebszustand, der nach Vollendung des Bedienvorgangs neu eingestellt würde, erfasst und mittels der in der Datenbank 4 abgespeicherten Verbrauchscharakteristik den Energieverbrauch abschätzt. Die Verbrauchscharakteristik kann dabei aus in der Vergangenheit gewonnenen Daten, dem Datenblatt des Herstellers oder daraus ableitbaren Werten gewonnen werden. Die zu erwartende Reichweitenänderung wird unmittelbar angezeigt, indem mittels der Steuervorrichtung 3 das dem Bedienelement 5 zugeordneten Beleuchtungsmittel 2 dem Nutzer eine visuelle Rückkopplung zu seinem Bedienvorgang gibt. Beispielsweise erzeugt das Beleuchtungsmittel 2 ein rotes Blinklicht mit zu der relativen Reichweitenänderung proportionalen Intensität, wie in Figur 2b dargestellt. Auf diese Weise wird dem Nutzer ein wertvoller Hinweis gegeben, den Bedienvorgang gegebenenfalls abzubrechen oder sofort rückgängig zu machen, falls die damit verbundene Änderung des Betriebs der Klimatisierungsanlage 8 die Restreichweite unverhältnismäßig reduzieren würde.

Die Reichweitenänderung kann dabei absolut und/oder relativ dargestellt werden. Die Steuervorrichtung 3 erfasst beispielsweise zu einem erfassten Bedienvorgang den Ladezustand der Fahrzeugbatterie 11, berechnet daraus zusammen mit der Änderung des Energieverbrauchs die absolute oder relative Reichweitenveränderung und zeigt diese an Alternativ kann der Ladezustand auch periodisch erfasst werden, z.B. im Minutentakt, wobei der momentane Ladezustand bei einem neu erfassten Bedienvorgang aus dem oder den zuletzt erfassten Ladezuständen der Fahrzeugbatterie extrapoliert wird.

Hat nun der Nutzer den Bedienvorgang vollendet, so wird ihm, wie in Figur 2c dargestellt, die zugehörige Reichweitenänderung unmittelbar graphisch auf der Anzeigefläche 1 angezeigt. Zu einer graphischen Darstellung 20 der eingestellten Funktionen der Klimatisierungsanlage 8 wird eine numerische Darstellung 21 der Reichweitenveränderung bereitgestellt, die wahlweise absolut, z.B. "- 10km" oder retativ, z.B. "- 5%" dargestellt werden kann. In den Anzeigefeldern 22, 23 können weitere Informationen bezüglich Energieverbrauch und Restreichweite visualisiert werden. So könnte beispielweise in dem Anzeigefeld 22 die relative Reichweitenreduzierung und in dem Anzeigefeld 23 der durch den Bedienvorgang geänderte Energieverbrauch angezeigt werden.

Es wäre auch zweckmäßig, für den Fall einer inkrementellen Veränderung, beispielsweise einer stufenlosen Temperatureinstellung, in einem der beiden, z.B. dem linken Anzeigefeld 22 die inkrementelle Reichweitenänderung durch die zuletzt durchgeführte Bedienaktion und in dem anderen Anzeigefeld 23 die kumulierte Reichweitenänderung darzustellen. Wie ebenfalls in Figur 2c dargestellt, führt nach der erfolgten graphischen Darstellung auf der Anzeigefläche 1 der Nutzer mit dem Zeigefinger seiner Hand 30 eine solche weitere Bedienaktion aus, indem er den Finger auf einer als Schieberegler ausgestalteten Schaltfläche 6 auf der berührungsempfindlichen Oberfläche der Anzeigefläche 1 entsprechend horizontal verschiebt, wobei ihm die Veränderung der Restreichweite unmittelbar in dem darüberliegenden Anzeigefeld 23 angezeigt wird.

Zusätzlich kann dem Fahrer auch angezeigt werden falls sich ohne Bedienvorgang der Energieverbrauch eines elektrischen Verbrauchers 8, 9 dramatisch ändert. Beispielsweise wird dem Fahrer auf die oben genannte Art visuell signalisiert, wenn eine sensorisch gesteuerte Klimaautomatik im Verlaufe eines heißen Sommertages einzelne Klimatisierungsfunktionen automatisch hochregelt, wenn die dadurch verursachte absolute oder relative Reichweitenänderung einen vorher festgelegten Grenzwert überschreitet.

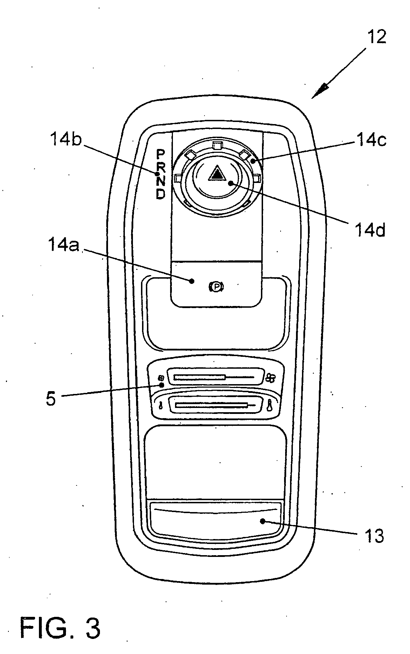

Die in dem obigen Ausführungsbeispiel des erfindungsgemäßen Verfahrens mit Bezug zu den Figuren 2a - 2c gezeigten Bedienvorgänge können alternativ oder auch zusätzlich besonders komfortabel über ein in der Mittelkonsole des Fahrzeugs angeordnetes Bedienteil 12 durchgeführt werden, wie es in Figur 3 dargestellt ist. Insbesondere können die Einstellungen der Lüfterstufe und der Innentemperatur über die Bedienelemente 5 ausgeführt werden, die hier als kapazitive, sogenannte "Slider"-Bedienelemente realisiert sind. Diese umfassen beispielsweise nach an sich bekannter Art zwei Ebenen aus leitfähigen Streifen. Die Streifen sind orthogonal und voneinander isoliert angebracht. Eine Ebene dient als Sensor, die andere übernimmt die Aufgabe des Treibers. Befindet sich ein Finger am Kreuzungspunkt zweier Streifen so ändert sich die Kapazität des Kondensators und es wird ein Signal an den Empfängerstreifen übermittelt. Durch ein Vorüberwischen mit seinem Finger in Horizontalrichtung kann der Fahrer des Fahrzeugs die Klimatisierungsanlage 8 somit besonders komfortabel bedienen.

Das Bedienteil 12 weist am unteren Rand eine Handauflage 13 zur Auflage der Hand für die Bedienung auf. Zweckmäßigerweise sind in dem Bedienteil 12 weitere Nutzerschnittstellenelemente 14a - 14d angeordnet, über die der Fahrer weitere Fahrzeugfunktionen bedienen kann. Diese umfassen beispielsweise einen Tastschalter 14a für eine elektromechanische Parkbremse, eine Gangwahlanzeige 14b, einen Gangwahldrehschalter 14c sowie einen Warnblinktastschalter 14d.

### Bezugszeichenliste

- 1: Anzeigefläche
- 2: Beleuchtungsmittel
- 3: Steuervorrichtung
- 4: Datenbank
- 5: Bedienelement
- 6: Schaltfläche
- 7: Datenbus im Fahrzeug
- 8: Klimatisierungsanlage
- 9: weiterer elektrischer Verbraucher
- 10: Mittel zum Erfassen des Energieverbrauchs
- 11: Fahrzeugbatterie
- 12: Bedienteil
- 13: Handauflage
- 14a - 14d: weitere Nutzerschnittstellenelemente
- 20: graphische Darstellung eines elektrischen Verbrauchers
- 21: numerische Darstellung der Reichweitenveränderung
- 22: Anzeigefeld
- 23: weiteres Anzeigefeld
- 30: Hand des Nutzers

## Patentansprüche

1. Verfahren zum Betreiben einer Nutzerschnittstelle in einem Fahrzeug, bei dem
- ein Bedienvorgang erfasst wird; durch welchen der Betrieb eines im Fahrzeug angeordneten elektrischen Verbrauchers (8; 9) verändert wird,
- die durch den Bedienvorgang verursachte Änderung des Energieverbrauchs des elektrischen Verbrauchers (8; 9) bestimmt wird,
- aus dem bestimmten Energieverbrauch eine durch die Veränderung des Betriebs des elektrischen Verbrauchers (8; 9) verursachte Reichweitenänderung des Fahrzeugs berechnet wird und
- die berechnete Reichweitenänderung automatisch und unmittelbar, ohne weiteren Bedienvorgang seitens des Nutzers angezeigt wird.

2. Verfahren nach Anspruch 1,
**dadurch gekennzeichnet,**
**dass** die Reichweitenänderung auf einer Anzeigefläche (1) im Fahrzeug graphisch dargestellt wird.

3. Verfahren nach Anspruch 1 oder 2,
**dadurch gekennzeichnet,**
**dass** die Reichweitenänderung an dem Bedienelement (5) angezeigt wird, über welches der Bedienvorgang erfasst wurde.

4. Verfahren nach einem der Ansprüche 1 bis 3,
**dadurch gekennzeichnet,**
**dass** bereits während des Bedienvorgangs, durch welchen der Betrieb des im Fahrzeug angeordneten elektrischen Verbrauchers (8; 9) verändert werden soll, die bei Vollendung des Bedienvorgangs zu erwartende Reichweitenänderung berechnet und angezeigt wird

5. Verfahren nach einem der vorangegangenen Ansprüche,
**dadurch gekennzeichnet,**
**dass** das Fahrzeug ein durch einen Elektromotor angetriebenes Fahrzeug ist.

6. Verfahren nach einem der vorangegangenen Ansprüche,
**dadurch gekennzeichnet,**
**dass** der elektrische Verbraucher eine Klimatisierungsanlage (8) für den Innenraum des Fahrzeugs ist.

7. Verfahren nach Anspruch 6,
**dadurch gekennzeichnet,**
**dass** die eingestellten und/oder durch den Bedienvorgang geänderten Klimatisierungsfunktionen graphisch auf der Anzeigefläche (1) mit den jeweils zugehörigen Reichweitenänderungen angezeigt werden.

8. Vorrichtung zum Betreiben einer Nutzerschnittstelle in einem Fahrzeug, umfassend
- Mittel (4; 10) zum Bestimmen des Energieverbrauchs eines im Fahrzeug angeordneten elektrischen Verbrauchers (8; 9),
- ein Bedienelement (5), durch welches ein Bedienvorgang erfassbar ist, durch welchen der Betrieb des elektrischen Verbrauchers (8; 9) veränderbar ist,
- Anzeigemittel (1; 2) zum Anzeigen von Informationen,
- eine Steuervorrichtung (3), die mit den Mitteln (4; 10) zum Bestimmen des Energieverbrauchs und den Anzeigemitteln (1; 2) gekoppelt ist, wobei mittels der Steuervorrichtung (3) die Anzeigemittel steuerbar sind und aus dem bestimmten Energieverbrauch eine Reichweitenänderung des Fahrzeugs berechenbar ist,
**dadurch gekennzeichnet, dass**
- die Anzeigemittel (1; 2) derart von der Steuervorrichtung (3) steuerbar sind, dass eine während und/oder nach Vollendung des Bedienvorgangs durch den Bedienvorgang zu erwartende und/oder verursachte Reichweitenänderung automatisch und unmittelbar, ohne weiteren Bedienvorgang seitens des Nutzers anzeigbar ist.

9. Vorrichtung zum Betreiben einer Nutzerschnittstelle nach Anspruch 8,
**dadurch gekennzeichnet,**
**dass** die Anzeigemittel leuchtstärkeregelbare und/oder farblich steuerbare Beleuchtungsmittel (2) zum Be- oder Hinterleuchten des Bedienelements (5) und/oder eine Anzeigefläche (1) zum Darstellen der Reichweitenänderung umfassen.

10. Fahrzeug, mit einer Vorrichtung zum Betreiben einer Nutzerschnittstelle nach einem der Ansprüche 8 oder 9.

## Claims

1. Method for operating a user interface in a vehicle, in which
- an operator control process is detected by which the operation of an electric load (8; 9) which is arranged in the vehicle is changed,
- the change in the energy consumption of the electric load (8; 9) caused by the operator control process is determined,
- a change in the range of the vehicle which is caused by the change in the operation of the electric load (8; 9) is calculated on the basis of the determined energy consumption, and
- the calculated change in the range is displayed automatically and directly without a further operator control process on the part of the user.

2. Method according to Claim 1,
**characterized**
**in that** the change in the range is displayed graphically on a display surface (1) in the vehicle.

3. Method according to Claim 1 or 2,
**characterized**
**in that** the change in the range is displayed on the operator control element (5) by means of which the operator control process was detected.

4. Method according to one of Claims 1 to 3,
**characterized**
**in that** the change in the range which is to be expected when the operator control process is ended is already calculated and displayed during the operator control process by which the operation of the electric load (8; 9) arranged in the vehicle is to be changed.

5. Method according to one of the preceding claims,
**characterized**
**in that** the vehicle is a vehicle which is driven by an electric motor.

6. Method according to one of the preceding claims,
**characterized**
**in that** the electric load is an air conditioning system (8) for the interior of the vehicle.

7. Method according to Claim 6,
**characterized**
**in that** the air conditioning functions which are set and/or changed by means of the operator control process are displayed graphically on the display surface (1) with the respectively associated changes in the range.

8. Device for operating a user interface in a vehicle, comprising
- means (4; 10) for determining the energy consumption of an electric load (8; 9) which is arranged in the vehicle,
- an operator control element (5) by means of which it is possible to detect an operator control process by which the operation of the electric load (8; 9) can be changed,
- display means (1; 2) for displaying information,
- a control device (3) which is coupled to the means (4; 10) for determining the energy consumption and to display means (1; 2), wherein the display means can be controlled by means of the control device (3) and a change in the range of the vehicle can be calculated from the determined energy consumption,
**characterized in that**
- the display means (1; 2) can be controlled by the control device (3) in such a way that a change in the range which is to be expected and/or is caused as a result of the operator control process during and/or after the ending of the operator control process can be displayed automatically and directly without a further operator control process on the part of the user.

9. Device for operating a user interface according to Claim 8,
**characterized**
**in that** the display means comprise lighting means (2) whose luminosity can be regulated and/or whose colour can be controlled in order to illuminate or back-light the operator control element (5) and/or a display surface (1) for displaying the change in the range.

10. Vehicle having a device for operating a user interface according to one of Claims 8 or 9.

## Revendications

1. Procédé de mise en fonctionnement d'une interface utilisateur dans un véhicule, dans lequel
- on détecte une opération de commande au moyen de laquelle le fonctionnement d'une charge électrique (8 ; 9) disposée dans le véhicule est modifié,
- on détermine la variation de consommation d'énergie de la charge électrique (8 ; 9) provoquée par l'opération de commande,
- à partir de la consommation d'énergie déterminée, on calcule une variation d'autonomie du véhicule provoquée par la modification du fonctionnement de la charge électrique (8 ; 9), et
- on affiche automatiquement et immédiatement la modification d'autonomie calculée sans autre opération de commande de la part de l'utilisateur.

2. Procédé selon la revendication 1, **caractérisé en ce que** l'autonomie est représentée graphiquement sur une surface d'affichage (1) dans le véhicule.

3. Procédé selon la revendication 1 ou 2, **caractérisé en ce que** la modification d'autonomie est affichée sur l'élément de commande (5) par l'intermédiaire duquel l'opération de commande a été détectée.

4. Procédé selon l'une quelconque des revendications 1 à 3, **caractérisé en ce que**, dès le début de l'opération de commande au moyen de laquelle le fonctionnement de la charge électrique (8 ; 9) disposée dans le véhicule doit être modifié, on calcule et affiche la modification d'autonomie à laquelle on doit s'attendre à la fin de l'opération de commande.

5. Procédé selon l'une quelconque des revendications précédentes, **caractérisé en ce que** le véhicule est un véhicule entraîné par un moteur électrique.

6. Procédé selon l'une quelconque des revendications précédentes, **caractérisé en ce que** la charge électrique est un système de climatisation (8) destiné à l'habitacle du véhicule.

7. Procédé selon la revendication 6, **caractérisé en ce que** les fonctions de climatisation réglées et/ou modifiées par l'opération de commande sont affichées graphiquement sur la surface d'affichage (1) avec les modifications d'autonomie respectives correspondantes.

8. Dispositif de mise en fonctionnement d'une interface utilisateur dans un véhicule, comprenant :
- des moyens (4 ; 10) destinés à déterminer la consommation d'énergie d'une charge électrique (8 ; 9) disposée dans le véhicule,
- un élément de commande (5) par l'intermédiaire duquel on peut détecter une opération de commande au moyen de laquelle le fonctionnement de la charge électrique (8 ; 9) peut être modifié,
- des moyens d'affichage (1 ; 2) destinés à afficher des informations,
- un dispositif de commande (3) qui est relié aux moyens (4 ; 10) de détermination de la consommation d'énergie et aux moyens d'affichage (1 ; 2), dans lequel les moyens d'affichage peuvent être commandés au moyen du dispositif de commande (3) et une modification de l'autonomie du véhicule peut être calculée à partir de la consommation d'énergie déterminée, **caractérisé en ce que**
- les moyens d'affichage (1 ; 2) peuvent être commandés par le dispositif de commande (3) de telle manière qu'une modification d'autonomie à laquelle on doit s'attendre et/ou provoquée par l'opération de commande pendant et/ou après l'achèvement de l'opération de commande, peut être affichée automatiquement et immédiatement, sans autre opération de commande de la part de l'utilisateur.

9. Dispositif de mise en fonctionnement d'une interface utilisateur selon la revendication 8, **caractérisé en ce que** les moyens d'affichage comprennent des moyens d'éclairage (2) dont l'intensité lumineuse peut être réglée et/ou dont la couleur peut être commandée pour l'éclairage ou le rétroéclairage de l'élément de commande (5) et/ou une surface d'affichage (1) destinée à représenter la modification de l'autonomie.

10. Véhicule comprenant un dispositif destiné à mettre en fonctionnement une interface utilisateur selon l'une quelconque des revendications 8 ou 9.
